# EUROPÄISCHE PATENTSCHRIFT

(11) **EP 1 664 129 B1**
(45) Veröffentlichungstag und Bekanntmachung des Hinweises auf die Patenterteilung: **21.03.2007**
(21) Anmeldenummer: 04764991.8
(22) Anmeldetag: 09.09.2004
(51) Int. Cl.: C08F 8/12, C08F 26/02, C11D 3/37

(54) **VERWENDUNG VON POLYVINYLAMIN- UND/ODER POLYVINYLAMIDHALTIGEN POLYMEREN ZUR GERUCHSVERHINDERUNG BEIM MASCHINELLEN GESCHIRRSPÜLEN**
USE OF POLYMERS CONTAINING POLYVINYLAMINE AND POLYVINYLAMIDE IN ORDER TO PREVENT SMELL IN DISHWASHERS
UTILISATION DE POLYMERES CONTENANT DE LA POLYVINYLAMINE OU DU POLYVINYLAMIDE POUR EMPECHER LES ODEURS LORS DU LAVAGE DE VAISSELLE A LA MACHINE

(30) Priorität: 15.09.2003 DE 10342862
(43) Veröffentlichungstag der Anmeldung: 07.06.2006
(73) Patentinhaber: BASF Aktiengesellschaft, 67056 Ludwigshafen (DE)
(72) Erfinder: MÜLLER, Bettina, 68167 Mannheim (DE); GUZMANN, Marcus, 69242 Mühlhausen (DE); BECKER, Heike, 68163 Mannheim (DE)
(86) Internationale Anmeldenummer: PCT/EP2004/010055
(87) Internationale Veröffentlichungsnummer: WO 2005/026220

(56) Entgegenhaltungen:
- EP-A- 1 213 344
- DE-A- 10 007 196
- DE-A- 10 160 993
- US-B1- 6 287 585

## Beschreibung

Die vorliegende Erfindung betrifft die Verwendung von Polymeren, die
(a) Monomereinheiten der Formel I 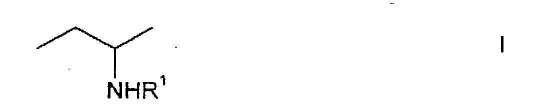 in der R¹ Wasserstoff oder C₁-C₄-Alkyl bedeutet,
(b) Monomereinheiten der Formel II 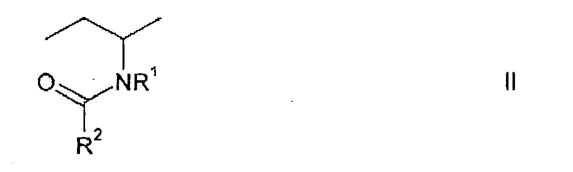 in der R¹ und R² unabhängig voneinander Wasserstoff oder C₁-C₄-Alkyl bedeuten,
   oder
(c) Monomereinheiten der Formel I und Monomereinheiten der Formel II
enthalten, zur Geruchsverhinderung beim maschinellen Geschirrspülen.

Bei längerem Nichtgebrauch einer Geschirrspülmaschine kommt es zur Entstehung unangenehmer Gerüche, die einerseits durch verschmutztes Geschirr in der Maschine, andererseits durch kontaminiertes Wasser vom letzten Spülgang verursacht werden.

Zur Vermeidung dieser Geruchsbelästigung kommen sogenannte Geschirrspülmaschinen-Deos zur Anwendung, die Parfüm freisetzen und so die schlechten Gerüche überdecken oder spezielle Parfümkomponenten oder Wirkstoffe enthalten, die die Geruchsmoleküle durch chemische Reaktion in der Luft abfangen.

Die Bekämpfung unangenehmer Gerüche spielt auch in anderen Anwendungsbereichen eine große Rolle.

So werden in der WO-A-00/66187 superabsorbierende Polymere, die geruchskontrollierende Verbindungen enthalten, zur Reduzierung oder Vermeidung von Ammoniakgeruch für den Einsatz in Windeln, Bandagen, Binden und Einwegpapierprodukten beschrieben. Als superabsorbierende Polymere werden u.a. Polyvinylamine genannt, explizit offenbart werden jedoch nur vernetzte Polyacrylsäuren, die in Kombination mit Cyclodextrin, Calciumphosphaten, amphoteren oberflächenaktiven Mitteln und Triclosan als geruchskontrollierenden Komponenten eingesetzt werden.

In der JP-A-09-040717 werden flüssigkeitabsorbierende, polymere, in Gelform vorliegende Materialien auf Basis von N-Vinylcarbonsäureamiden, bevorzugt N-Vinylacetamid und N-Methyl-N-vinylacetamid, und gegebenenfalls anderen copolymerisierbaren ethylenisch ungesättigten Monomeren beschrieben. Für diese Materialien wird eine Vielzahl von Anwendungen aufgelistet, wobei die Feuchtigkeitsaufnahme bzw. -kontrolle im Vordergrund steht und der Einsatzzweck Desodorierung nur am Rande erwähnt wird.

Aus der JP-A-2000-119513 sind weiterhin transparente Gelzusammensetzungen bekannt, die Polyvinylcarbonsäureamide, Wasser und eine Säure enthalten, und als Desodorant für alkalische Geruchsstoffe in Wohnräumen, Toiletten und Fahrzeugen vorgeschlagen werden.

Zur Reduzierung der Raumluftkonzentration an Aldehyden, vor allem Formaldehyd, und sauren Gasen, wie Schwefeldi- und -trioxid, Stickstoffoxiden und Schwefelwasserstoff, werden in der US-A-4 892 719 Raumluftfilter auf der Basis poröser Träger, die mit einer Kombination aus einem wasserlöslichen polymeren Amin und einem wasserlöslichen, leicht flüchtigen, flüssigen Weichmacher beschichtet sind, beschrieben. U.a. werden als polymere Amine auch Polyvinylamine genannt, explizit offenbart werden jedoch nur Polyethylenimine.

Aus der JP-A-2000-312809 sind in Klimaanlagen einsetzbare Filter auf Basis poröser anorganischer Trägermaterialien bekannt, an die als Desodorierungsmittel u.a. primäre und sekundäre Aminogruppen enthaltende Polyvinylamine über ein synthetisches Harz gebunden sind. Diese Filter sollen desodorierend gegen Ammoniak, Tabakrauch und Schwefelwasserstoff wirken.

In der JP-A-09-201405 werden weiterhin feine poröse Partikel auf Basis anorganischer Materialien beschrieben, an die ein Polyvinylamin- und Polyvinylform- oder -acetamideinheiten enthaltendes Polymer durch Chelatisierung gebunden ist. Diese Partikel sollen geruchstilgende Wirkung gegenüber Ammoniak, Aminen, Tabakrauch, Schwefelwasserstoff, Mercaptanen und Aldehyden haben.

Schließlich werden in der EP-A-794 053 mehrschichtige Verpackungen für sauerstoffempfindliche Nahrungsmittel und Getränke beschrieben, die eine Sauerstoff-Barriereschicht, einen Sauerstoffänger und einen Absorber für Oxidationsnebenprodukte, wie Aldehyde, aufweisen. Als mögliche Absorber werden Polyethylenimine, (Co)Polymere von Allylamin, Diallylamin, Vinylamin und Vinylpyridin aufgelistet.

Der Erfindung lag die Aufgabe zugrunde, Polymere bereitzustellen, mit denen Geruchsbelästigungen in Geschirrspülmaschinen verhindert oder zumindest deutlich reduziert werden können.

Demgemäß wurde die Verwendung von Polymeren, die
(a) Monomereinheiten der Formel I 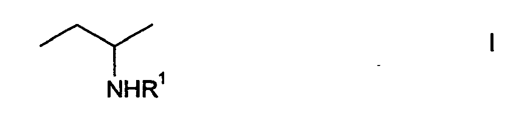 in der R¹ Wasserstoff oder C₁-C₄-Alkyl bedeutet,
(b) Monomereinheiten der Formel II 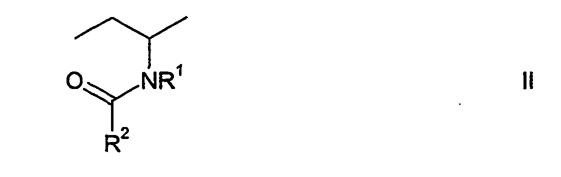 in der R¹ und R² unabhängig voneinander Wasserstoff oder C₁-C₄-Alkyl bedeuten, oder
(c) Monomereinheiten der Formel I und Monomereinheiten der Formel II enthalten, zur Geruchsverhinderung beim maschinellen Geschirrspülen gefunden.

Die erfindungsgemäß zu verwendenden Polymere können nur aus den Monomereinheiten der Formel I oder nur aus den Monomereinheiten der Formel II aufgebaut sein, vorzugsweise enthalten sie jedoch beide Monomereinheiten.

Der Gehalt dieser besonders geeigneten Polymere an den Monomereinheiten I beträgt in der Regel 0,1 bis 99,9 mol-%, der Gehalt an den Monomereinheiten II liegt dementsprechend ebenfalls bei 0,1 bis 99,9 mol-%. Besonders bevorzugte Zusammensetzungen dieser Polymere richten sich nach dem Anwendungszweck. So sind für die Adsorption von Aldehyden möglichst vollständig hydrolysierte Polymere mit einem möglichst hohen Gehalt an Monomereinheiten I und für die Adsorption von Aminen weitgehend unhydrolysierte Polymere mit möglichst hohem Gehalt an Monomereinheiten II besonders geeignet.

Die erfindungsgemäß zu verwendenden nur auf den Monomereinheiten I und/oder II basierenden Polymere können durch radikalische Polymerisation von N-Vinylcarbonsäureamiden, wie N-Vinylformamid, N-Vinyl-N-methylformamid, N-Vinyl-acetamid, N-Vinyl-N-methylacetamid, N-Vinyl-N-ethylformamid, N-Vinyl-N-n-propylformamid, N-Vinyl-N-isopropylformamid, N-Vinyl-N-isobutylformamid, N-Vinyl-N-methylacetamid, N-Vinyl-N-n-butylacetamid und N-Vinyl-N-methylpropionamid, vorzugsweise von N-Vinylformamid, und bevorzugt anschließende vollständige oder insbesondere partielle Hydrolyse der Amidfunktionen zu Aminfunktionen hergestellt werden.

Die Hydrolyse kann unter alkalischen oder sauren Bedinungen durchgeführt werden, wobei vorzugsweise in wäßrigem Medium und bei einer Temperatur von 70 bis 90°C gearbeitet wird. Es ist jedoch auch möglich, inerte organische Lösungsmittel, wie Dioxan oder aliphatische oder aromatische Kohlenwasserstoffe, oder Alkohole, z.B. tert.-Butanol, als Reaktionsmedium zu verwenden.

Bei der alkalischen Hydrolyse liegt zweckmäßigerweise ein pH-Wert von 9 bis 14 vor, der mit Hilfe einer anorganischen Base, wie einem Alkali- und Erdalkalimetallhydroxid, z.B. Natriumhydroxid und Kaliumhydroxid, Ammoniak, oder einer organischen Base, wie Aminen, eingestellt wird, wobei in der Regel 0,05 bis 1,5 Äquivalente Base pro Amidfunktion verwendet werden.

Die saure Hydrolyse wird in der Regel bei einem pH-Wert von 0 bis 5, vor allem 0 bis 3, mit einer organischen Säure, wie einer Carbonsäure, z.B. Ameisensäure, Essigsäure und Propionsäure, oder einer Sulfonsäure, z.B. Benzolsulfonsäure und Toluolsulfonsäure, oder vorzugsweise einer anorganischen Säure, z.B. Salzsäure, Bromwasserstoffsäure, Schwefelsäure und Phosphorsäure, vorgenommen, wobei pro Amidfunktion 0,05 bis 1,5 Äquivalente Säure eingesetzt werden.

Weitere Einzelheiten zu den auf Monomereinheiten I und/oder II basierenden Polymeren sowie zu ihrer Herstellung sind der EP-A-71 050 zu entnehmen.

Die erfindungsgemäß zu verwendenden Polymere können zusätzlich ein monoethylenisch ungesättigtes Comonomer (d) einpolymerisiert enthalten. Selbstverständlich können auch mehrere Comonomere (d) einpolymerisiert sein. Als Comonomere (d) eignen sich anionische, nichtionische und kationische Monomere.

Als geeignete anionische Comonomere (d) seien beispielsweise genannt:
- α,β-ungesättigte Monocarbonsäuren, die vorzugsweise 3 bis 6 Kohlenstoffatome aufweisen, wie Acrylsäure, Methacrylsäure, Ethacrylsäure, Crotonsäure und Vinylessigsäure, und deren Alkalimetall- und Ammoniumsalze;
- ungesättigte Dicarbonsäuren, die vorzugsweise 4 bis 6 Kohlenstoffatome aufweisen, wie Itaconsäure und Maleinsäure, deren Anhydride, wie Maleinsäureanhydrid, und deren Alkalimetall- und Ammoniumsalze;
- Halbester von ungesättigten Dicarbonsäuren mit C₁-C₆-Alkoholen, wie Itacon- und Maleinsäurehalbester.

Als anionisches Comonomer (d) bevorzugt sind Acrylsäure und ihre Salze, vor allem Natriumacrylat.

Geeignete nichtionische Comonomere (d) sind z.B.:
- Ester von monoethylenisch ungesättigten C₃-C₆-Carbonsäuren, vor allem von Acrylsäure und Methacrylsäure, mit einwertigen C₁-C₂₂-Alkoholen, insbesondere mit C₁-C₁₆-Alkoholen; sowie Hydroxyalkylester von monoethylenisch ungesättigten C₃-C₆-Carbonsäuren, vor allem von Acrylsäure und Methacrylsäure, mit zweiwertigen C₂-C₄-Alkoholen, wie Methyl(meth)acrylat, Ethyl(meth)acrylat, n-Butyl(meth)-acrylat, sec.-Butyl(meth)acrylat, tert.-Butyl(meth)acrylat, Ethylhexyl(meth)acrylat, Hydroxyethyl(meth)acrylat und Hydroxypropyl(meth)acrylat;
- Amide von monoethylenisch ungesättigten C₃-C₆-Carbonsäuren, vor allem von Acrylsäure und Methacrylsäure, mit primären und sekundären C₁-C₁₂-Aminen, wie (Meth)Acrylamid, N-Methyl(meth)acrylamid, N-Isopropyl(meth)acrylamid und N-Butyl(meth)acrylamid;
- Vinylester von gesättigten C₁-C₁₈-Carbonsäuren, wie Vinylacetat und Vinylpropionat;
- aliphatische und aromatische Olefine, wie Ethylen, Propylen, C₄-C₂₄-α-Olefine, insbesondere C₄-C₁₆-α-Olefine, z.B. Butylen, Isobutylen, Diisobuten, Styrol und α-Methylstyrol, sowie auch Diolefine mit einer aktiven Doppelbindung, z.B. Butadien;
- ungesättigte Alkohole, wie Vinylalkohol und Allylalkohol;
- ungesättigte Nitrile, wie Acrylnitril und Methacrylnitril.

Als geeignete kationische Comonomere (d) seien z.B. genannt:
- N-Vinyllactame von Lactamen mit 5- bis 7-gliedrigen Ringen, wie N-Vinylpyrrolidon, N-Vinylcaprolactam und N-Vinyloxazolidon;
- Vinylimidazol- und Vinylimidazolineinheiten enthaltende Monomere und deren Alkylderivate, insbesondere C₁-C₅-Alkylderivate, sowie deren Quatemisierungsprodukte, wie N-Vinylimidazol, N-Vinyl-2-methylimidazol, N-Vinyl-4-methylimidazol, N-Vinyl-5-methylimidazol, N-Vinyl-2-ethylimidazol, N-Vinylimidazolin, N-Vinyl-2-methylimidazolin und N-Vinyl-2-ethylimidazolin;
- Vinylpyridine und deren Quatemisierungsprodukte, wie 4-Vinylpyridin, 2-Vinylpyridin, N-Methyl-4-vinylpyridin und N-Methyl-2-vinylpyridin;
- basische Ester von ethylenisch ungesättigten Carbonsäuren, insbesondere die Ester von α,β-ungesättigten C₃-C₆-Monocarbonsäuren, vor allem von Acrylsäure und Methacrylsäure, mit Aminoalkoholen, vor allem N,N-Di(C₁-C₄-alkyl)amino-C₂-C₆-alkoholen, und deren Quaternisierungsprodukte, wie Dimethylaminoethyl-(meth)acrylat, Dimethylaminopropyl(meth)acrylat, Diethylaminoethylacrylat, Diethylaminopropylacrylat, Dimethylaminobutylacrylat und Diethylaminobutylacrylat;
- basische Amide von ethylenisch ungesättigten Carbonsäuren, insbesondere die N,N-Di(C,-C₄-alkyl)amino(C₂-C₆-alkyl)amide von α,β-ungesättigten C₃-C₆-Monocarbonsäuren, vor allem von Acrylsäure und Methacrylsäure, und deren Quatemisierungsprodukte, wie Dimethylaminoethyl(meth)acrylamid, Diethylaminoethyl-(meth)acrylamid, Dimethylaminopropyl(meth)acrylamid und Diethylaminopropyl-(meth)acrylamid.

Wenn die erfindungsgemäß zu verwendenden Polymere Comonomere (d) einpolymerisiert enthalten, liegt ihr Gehalt im allgemeinen bei 0,1 bis 80 mol-%, insbesondere bei 10 bis 50 mol-%, bezogen auf das Polymer.

Nähere Einzelheiten zu diesen Copolymeren sowie zu ihrer Herstellung sind in der WO-A-98/13882 zu finden.

Die erfindungsgemäß zu verwendenden Polymere können in wasserlöslicher Form vorliegen, sie können aber auch vernetzt und damit wasserunlöslich sein.

Die Vernetzung kann durch thermische Behandlung des Polymers und/oder durch Umsetzung mit Ameisensäurederivaten vorgenommen werden, wobei gezielt Amidine gebildet werden.

Bevorzugt erfolgt die Vernetzung jedoch durch Einpolymerisieren eines weiteren mindestens zwei ethylenisch ungesättigte, nicht konjugierte Doppelbindungen enthaltenden, vernetzenden Comonomers (e).

Als Vernetzer (e) eignen sich beispielsweise:
- Alkylenbisacrylamide, wie Methylenbisacrylamid und N,N'-Acryloylethylendiamin;
- Divinylalkylenharnstoffe, wie N,N'-Divinylethylenhamstoff und N,N'-Divinylpropylenharnstoff;
- Ethylidenbis-3-(N-vinylpyrrolidon), N,N'-Divinyldümidazolyl(2,2')butan und 1,1'-Bis-(3,3'-vinylbenzimidazolith-2-on)1,4-butan;
- Alkylenglykoldi(meth)acrylate, wie Ethylenglykoldi(meth)acrylat, Diethylenglykoldi(meth)acrylat und Tetraethylenglykoldi(meth)acrylat;
- aromatische Divinylverbindungen, wie Divinylbenzol und Divinyltoluol;
- Vinylacrylat, Allyl(meth)acrylat, Triallylamin, Divinyldioxan und Pentaerythrittriallylether.

Erfindungsgemäß zu verwendende vemetzte Polymere enthalten in der Regel 20 bis 99,9 mol-% der Monomereinheiten (a), (b) oder (c), 0 bis 80 mol-% des Comonomers (d) und 0,1 bis 20 mol-% des Comonomers (e) einpolymerisiert.

Enthalten die vemetzten Polymere kein Comonomer (d), so liegt ihre Zusammensetzung vorzugsweise bei 80 bis 99,9 mol-% Monomereinheiten (a), (b) oder (c) und 0,1 bis 20 mol-% des Comonomers (e).

Ist ein Comonomer (d) in den vemetzten Polymeren enthalten, so weisen sie einen bevorzugten Gehalt von 20 bis 99,9 Monomereinheiten (a), (b) oder (c), 0,1 bis 80 mol-% des Comonomers (d) und 0,1 bis 20 mol-% des Comonomers (e) auf.

Schließlich können die erfindungsgemäß zu verwendenden Comonomere (e) und gewünschtenfalls (d) enthaltenden Polymere auch in Form eines Popcorn-Polymerisats vorliegen. Derartige Polymere und Verfahren zu ihrer Herstellung sind in der DE-A-42 37 439 beschrieben.

Die erfindungsgemäß zu verwendenden Polymere weisen in der Regel mittlere Molekulargewichte M_{w} von 1000 bis 6 000 000 g/mol, vorzugsweise 45 000 bis 450 000 g/mol, auf.

Ihre K-Werte liegen üblicherweise bei 10 bis 250, bevorzugt bei 45 bis 90 (gemessen in 0,5 gew.-%iger wäßriger Lösung bei 25°C, nach H. Fikentscher, Cellulose-Chemie, Band 13, Seite 58-64 und 71-74 (1932)).

Die erfindungsgemäß zu verwendenden Polymere eignen sich hervorragend zur Geruchsverhinderung beim maschinellen Geschirrspülen.

Sie können dabei sowohl dem Klarspül- als auch dem Reinigungsmittel zugesetzt werden oder aber separat als Feststoff in die Geschirrspülmaschine eingebracht werden.

Ihr desodorierender Effekt ist am größten, wenn sie im Klarspülgang freigesetzt werden und zum Teil im Maschinensumpf verbleiben. Zum einen werden nach dem Hauptspülgang verbliebene Geruchskomponenten gebunden, bevor die Geschirrspülmaschine geöffnet wird. Zum anderen verbleiben Reste des Klarspülmittels im Maschinensumpf, so daß auch die durch Speisereste, die an verschmutztem und bis zum nächsten Spülgang in der Maschine stehendem Geschirr haften, hervorgerufene Geruchsbelästigung behoben wird.

Die erfindungsgemäß zu verwendenden Polymere können auf verschiedene Art zur Anwendung kommen.

So werden sie im Klarspülmittel zweckmäßigerweise in gelöster Form eingesetzt.

Werden sie in der Geschirreinigerformulierung eingesetzt, so empfiehlt es sich, ihre Freisetzung zu verzögern bzw. zu steuern, so daß sie auch noch im und nach dem Klarspülgang wirken können. Dies kann beispielsweise durch Beschichtung mit einem erst unter den Bedingungen des Klarspülgangs (Temperatur, pH-Wert) löslichen Material oder den Einbau in eine Matrix aus derartigem Material geschehen, wobei sie in dieser Form auch im Klarspüler oder auch als getrennte Formulierung zum Einsatz kommen können. Als Beschichtungs- oder Matrixmaterial sind z.B. durch unvollständige Hydrolyse von Polyvinylacetat hergestellter Polyvinylalkohol (Hydrolysegrad von in der Regel 88 bis 98%, bevorzugt 89 bis 95%, besonders bevorzugt 91 bis 92%), Gelatine, Polyvinylpyrrolidon, Polyethylenoxid, Cellulose und deren Derivate, Stärke und deren Derivate und Mischungen dieser Materialien geeignet.

Für die Anwendung über einen längeren Gebrauchszeitraum eignen sich insbesondere erfindungsgemäß zu verwendende Polymere in Form eines Popcom-Polymerisats, das z.B. in einem Korb oder einem Netz in die Geschirrspülmaschine eingebracht wird und auch während der Spülcyclen in der Maschine verbleibt oder währenddessen entfernt wird. Schließlich könnten die erfindungsgemäß zu verwendenden Polymere für diesen Zweck auch irreversibel auf ein geeignetes Trägermaterial aufgebracht werden.

### Beispiele

### I) Herstellung von Polymeren

### Polymer 1

Zu 100 g phosphatgepuffertem vollentsalztem Wasser (pH-Wert 6-7) wurden bei 78°C Innentemperatur und 380 mbar 20,2 g Vinylformamid (99%ig) und eine Lösung von 0,1 g 2,2'-Azobis(2-methylpropionamidin)dihydrochlorid in 4,9 g Wasser langsam getrennt zudosiert. Nach 2,5-stündigem Auspolymerisieren bei 80°C und Abdestillieren von 25 g Wasser betrug der Umsatz 98%.

Es wurde eine viskose Polymerlösung mit einem Feststoffgehalt von 20 Gew.-% erhalten. Der K-Wert des Polymers betrug 90 (0,5 gew.-%ig in Wasser, 25°C).

### Polymer 1a

Eine Mischung aus 100 g einer wie oben beschrieben erhaltenen Lösung des Polymers 1 und 1,25 g einer 40 gew.-%igen wäßrigen Natriumhydrogensulfitlösung wurde auf 80°C erhitzt. Dann wurden 48,44 g einer 25 gew.-%igen Natronlauge zugegeben. Nach vierstündigem Rühren bei 80°C und Abkühlen auf 40°C wurden zur Neutralisation 21 g einer 38 gew.-%igen Salzsäure zugegeben.

Es wurde eine Polymerlösung mit einem Feststoffgehalt von 22,0 Gew.-% und einer Viskosität von 560 mPas (Brookfield Spindel 3/50Upm/RT) erhalten. Der Hydrolysegrad des Polymers betrug 89% (gemessen mittels Polyelektrolyttitration).

### Polymer 1b

Es wurde analog zu Polymer 1a vorgegangen, jedoch wurden 22,5 g Natronlauge und 10,1 g Salzsäure eingesetzt.

Es wurde eine Polymerlösung mit einem Feststoffgehalt von 18,9 Gew.-% und einer Viskosität von 1080 mPas (Brookfield Spindel 4/100Upm/RT) erhalten. Der Hydrolysegrad des Polymers betrug 50% (gemessen mittels Polyelektrolyttitration).

### Polymer 2

Zu 115 g phosphatgepuffertem vollentsalztem Wasser (pH-Wert 6 - 7) wurden bei 80°C Innentemperatur und 450 mbar 24,5 g Vinylformamid (99%ig) und eine Lösung von 0,41 g 2,2'-Azobis(2-methylpropionamidin)dihydrochlorid in 4,9 g Wasser langsam getrennt zudosiert. Nach 5,5-stündigem Auspolymerisieren bei 80°C und Abdestillieren von 31 g Wasser betrug der Umsatz 98%.

Es wurde eine Polymerlösung mit einem Feststoffgehalt von 22,5 Gew.-% und einer Viskosität von 336 mPas (Brookfield Spindel 2/50 Upm/RT) erhalten. Der K-Wert des Polymers betrug 47 (1 gew.%ig in Wasser, 25°C).

### Polymer 2a

Eine Mischung aus 81 g einer wie oben beschrieben erhaltenen Lösung des Polymers 2 und 1,05 g einer 40 gew.-%igen wäßrigen Natriumhydrogensulfitlösung wurde auf 80°C erhitzt. Dann wurden 41,7 g einer 25 gew.-%igen Natronlauge zugegeben. Nach vierstündigem Rühren bei 80°C und Abkühlen auf 40°C wurden zur Neutralisation 17,6 g einer 38 gew.-%igen Salzsäure zugegeben.

Es wurde eine Polymerlösung mit einem Feststoffgehalt von 23,1 Gew.-% und einer Viskosität von 86 mPas (Brookfield Spindel 2/100Upm/RT) erhalten. Der Hydrolysegrad des Polymers betrug 90% (gemessen mittels Polyelektrolyttitration).

### Polymer 3

Eine Mischung von 800 g destilliertem Wasser, 180 g Vinylformamid (99%ig), 20 g N-Vinylpyrrolidon, 4 g N,N'-Divinylethylenhamstoff und 0,05 g Natriumhydroxid wurde unter Einleiten eines schwachen Stickstoffstroms auf 60°C erhitzt. Dann wurde eine Lösung von 0,4 g Natriumdithionat in 10 g destilliertem Wasser auf einmal zugesetzt. Nach 15 min entstanden feine Flocken, die nach weiterem vierstündigen Erhitzen auf 60°C und Abkühlen abfiltriert und mit Wasser gewaschen wurden.

Es wurde ein Popcorn-Polymerisat mit einem Feststoffgehalt von 41,2 Gew.-% erhalten. Die Ausbeute betrug 97,8%.

### Polymer 3a

Eine Suspension von 100 g des wie oben beschrieben erhaltenen Polymers 3 in 650 g Wasser wurde mit 60 g einer 38 gew.%igen Salzsäure versetzt und dann 12 h unter intensivem Rühren auf 90°C erhitzt, wobei der Verlauf der Hydrolyse durch enzymatische Analyse des freigesetzten Formiats kontrolliert wurde. Nach Abkühlen auf Raumtemperatur wurde das Polymer abfiltriert, mit Wasser gewaschen und im Vakuumtrockenschrank bei 70°C getrocknet.

Es wurden 50 g Polymer mit einem Feststoffgehalt von 95% und einem Hydrolysegrad von 79% (bestimmt durch enzymatische Analyse des freigesetzten Formiats) erhalten.

### Polymer 3b

Eine Suspension von 100 g des wie oben beschrieben erhaltenen Polymers 3 in 650 g Wasser wurde mit 40 g einer 50 gew.-%igen Natronlauge versetzt und dann 15 h unter intensivem Rühren auf 80°C erhitzt, wobei der Verlauf der Hydrolyse durch enzymatische Analyse des freigesetzten Formiats kontrolliert wurde. Nach Abkühlen auf Raumtemperatur wurde das Polymer abfiltriert, mit Wasser gewaschen und im Vakuumtrockenschrank bei 70°C getrocknet.

Es wurden 33 g Polymer mit einem Feststoffgehalt von 91% und einem Hydrolysegrad von 82% (bestimmt durch enzymatische Analyse des freigesetzten Formiats) erhalten.

### Polymer 4

Zu 908,3 g phosphatgepuffertem vollentsalztem Wasser (pH-Wert 6-7) wurden unter Stickstoffeinleitung bei 80°C eine Lösung von 2,7 g 2,2'-Azobis(2-methylpropionamidin)dihydrochlorid in 51,3 g Wasser, 211,1 g Vinylformamid und 317,5 g einer 37,3 gew.-%igen wäßrigen Lösung von Natriumacrylat langsam getrennt zudosiert. Nach sechsstündigem Auspolymerisieren bei 80°C betrug der Umsatz 90%.

Es wurde eine viskose Polymerlösung mit einem Feststoffgehalt von 25,8 Gew.-% erhalten. Der K-Wert des Polymers betrug 87,4 (0,5 gew.-%ig in Wasser, 25°C).

### Polymer 4a

Eine Mischung aus 159,8 g einer wie oben beschrieben erhaltenen Lösung des Polymers 4 und 2,0 g einer 40 gew.-%igen wäßrigen Natriumhydrogensulfitlösung wurde auf 80°C erhitzt. Dann wurden 41,0 g einer 25 gew.-%igen Natronlauge zugegeben. Nach vierstündigem Rühren bei 80°C und Abkühlen auf 40°C wurden zur Neutralisation 22 g einer 37 gew.-%igen Salzsäure zugegeben.

Es wurde eine Polymerlösung mit einem Feststoffgehalt von 7 Gew.-% erhalten. Der Hydrolysegrad des Polymers betrug 67,7% (bestimmt durch enzymatische Analyse des freigesetzten Formiats).

### II) Prüfung der hergestellten Polymere

### Beispiel 1

Zur Beurteilung der Wirksamkeit des Polymers 2a als Geruchsverhinderer in einer mit verschmutztem Geschirr beladenen Geschirrspülmaschine wurde wie folgt vorgegangen:

Vor dem Versuch wurden jeweils 2 Geschirrspülmaschinen (Miele G 686 SC; Test-und Referenzspülmaschine) durch einen Spülgang mit Zitronensäure vorgereinigt.

Dann wurden in aufeinanderfolgenden Versuchen unterschiedliche Mengen
A: 300 mg
B: 750 mg
C: 1500 mg
der erhaltenen wäßrigen Lösung des Polymers 2a auf einem Uhrglas sowie 20 g IKW-Ballastschmutz (SÖFW-Journal, 124. Jahrgang, 14/98, S. 1029) auf einem weiteren Uhrglas in die Testspülmaschine gestellt. In der Referenzspülmaschine wurden jeweils ausschließlich 20 g des IKW-Ballastschmutzes gelagert.

Beide Spülmaschinen wurden 2 d verschlossen stehen gelassen. Dann wurde der Geruch im Innenraum der Testspülmaschine im Vergleich zur Referenzspülmaschine von 11 Probanden anhand der folgenden Notenskala beurteilt:
Note 1: deutlich angenehmer als Referenz
Note 2: angenehmer als Referenz
Note 3: kein Unterschied
Note 4: unangenehmer als Referenz
Note 5: deutlich unangenehmer als Referenz

Die erhaltenen Ergebnisse sind in Tabelle 1 zusammengestellt.

**Tabelle 1**

| Note | Vergebene Noten | | |
|---|---|---|---|
| | A | B | C |
| | | | |
| 1 | | 1 | 2 |
| 2 | 3 | 7 | 8 |
| 3 | 8 | 3 | 1 |
| 4 | | | |
| 5 | | | |
| Durchschnitt | 2,5 | 2,2 | 1,9 |

### Beispiel 2

Zur Beurteilung der Wirksamkeit des Polymers 2a als Geruchsverhinderer bei Einsatz in einem Klarspülmittel wurde wie folgt vorgegangen:

Vor dem Versuch wurden jeweils 2 Geschirrspülmaschinen (Test- und Referenzspülmaschine) durch einen Spülgang mit Zitronensäure vorgereinigt.

Dann wurde nach Beladung beider Spülmaschinen mit Ballastschmutz unter folgenden Bedingungen gespült:

| | |
|---|---|
| Geschirrspüler: | Miele G 686 SC |
| Spülgänge: | 1 Spülgänge 55°C Normal (ohne Vorspülen) |
| Spülgut: | ohne |
| Geschirrspülmittel: | 21 g (Mischung ohne Parfüm) |
| Klarspültemperatur: | 65°C |
| Wasserhärte: | 14°dH |
| IKW-Ballastschmutz: | 50 g im Hauptspülgang, 2 g im Klarspülgang |

Die Spülgänge wurden jeweils vor Beginn des Klarspülgangs unterbrochen. In die Testspülmaschine wurden zusätzlich zu den 2 g Ballastschmutz in aufeinanderfolgenden Versuchen unterschiedliche Mengen
A: 300 mg
B: 750 mg
C: 1500 mg
der erhaltenen wäßrigen Lösung des Polymers 2a gegeben.

Nach Beendigung des Klarspülgangs und 30-minütigem Warten wurde der Geruch wie bei Beispiel 1 nach Öffnen der Spülmaschinen beurteilt.

Die erhaltenen Ergebnisse sind in Tabelle 2 zusammengestellt.

**Tabelle 2**

| Note | Vergebene Noten | | |
|---|---|---|---|
| | A | B | C |
| | | | |
| 1 | | | 2 |
| 2 | 2 | 6 | 6 |
| 3 | 9 | 5 | 2 |
| 4 | | | |
| 5 | | | |
| Durchschnitt | 2,8 | 2,5 | 2,2 |

Nach weiteren 2 h wurde der Geruch in den Spülmaschinen erneut bewertet.

Die erhaltenen Ergebnisse sind in Tabelle 3 zusammengestellt.

**Tabelle 3**

| Note | Vergebene Noten | | |
|---|---|---|---|
| | A | B | C |
| | | | |
| 1 | | 2 | 3 |
| 2 | 3 | 7 | 8 |
| 3 | 8 | 2 | |
| 4 | | | |
| 5 | | | |
| Durchschnitt | 2,7 | 2,0 | 1,7 |

### Beispiel 3

Zur Beurteilung der Wirksamkeit des Polymers 3a als Geruchsverhinderer bei Zusatz im Klarspülgang wurde analog Beispiel 2 vorgegangen, jedoch wurden anstelle der Polymerlösung in aufeinanderfolgenden Versuchen unterschiedliche Mengen
D: 250 mg
E: 500 mg

Popcorn-Polymerisat in einem Drahtkorb auf den unteren Spülwagen der Testspülmaschine gegeben.

Die bei der Beurteilung erhaltenen Ergebnisse sind in Tabelle 4 zusammengestellt.

**Tabelle 4**

| Note | Vergebene Noten | |
|---|---|---|
| | D | E |
| | | |
| 1 | | |
| 2 | 2 | 5 |
| 3 | 9 | 6 |
| 4 | | |
| 5 | | |
| Durchschnitt | 2,8 | 2,6 |

### Beispiel 4

Die Fähigkeit der hergestellten Polymere, Triethylamin zu adsorbieren, wurde wie folgt getestet:

In ein gasdichtes 10 I-Glasgefäß wurden jeweils 36,6 mg (ca. 1860 ppm v/v) Triethylamin vorgelegt. Mit einem Mini-Gaschromatograph (Varian CP 4900) wurden im Abschnitt von 10 min Gasproben entnommen und analysiert.

Nach Stabilisierung der Triethylamin-Ausgangskonzentration (nach ca. 50 min) wurden 0,6 ml Polymerlösung bzw. 200 mg Popcorn-Polymerisat in das Glasgefäß gegeben.

Nach 240 min wurde die Abnahme der Triethylaminkonzentration im Gasraum bestimmt. Als Referenz diente im Fall der Polymerlösungen reines Wasser. Die in Tabelle 5 zusammengestellten Versuchsergebnisse geben die prozentuale Adsorption von Triethylamin am Polymer an und sind um diesen Referenzwert korrigiert.

**Tabelle 5**

| Polymer | Adsorption von Triethylamin |
|---|---|
| 1b | 3,2% |
| 2a | 28,4% |
| 3 | 34,0% |
| 3a | 79,1% |

### Beispiel 5

Die Fähigkeit der hergestellten Polymere, Hexanal zu adsorbieren, wurde analog Beispiel 4 getestet.

Anstelle von Triethylamin wurden jetzt 36,2 mg (ca. 1950 ppm v/v) Hexanal vorgelegt.

Die in Tabelle 6 zusammengestellten Versuchsergebnisse geben die prozentuale Adsorption von Hexanal am Polymer an und sind wie oben um den Wasser-Referenzwert korrigiert.

**Tabelle 6**

| Polymer | Adsorption von Hexanal |
|---|---|
| 1a | 8,8% |
| 1b | 15,6% |
| 2a | 21,3% |
| 3 | 6,7% |
| 3a | 9,0% |
| 4a | 30,0% |

## Patentansprüche

1. Verwendung von Polymeren, die
(a) Monomereinheiten der Formel I 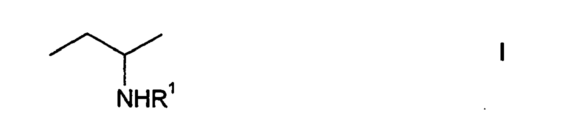 in der R¹ Wasserstoff oder C₁-C₄-Alkyl bedeutet,
(b) Monomereinheiten der Formel II 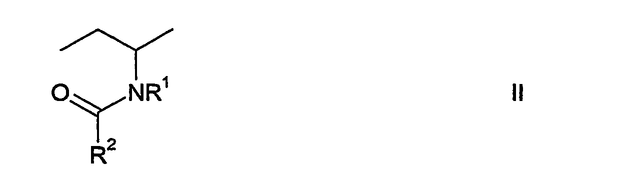 in der R¹ und R² unabhängig voneinander Wasserstoff oder C₁-C₄-Alkyl bedeuten,
oder
(c) Monomereinheiten der Formel I und Monomereinheiten der Formel II enthalten, zur Geruchsverhinderung beim maschinellen Geschirrspülen.

2. Verwendung nach Anspruch 1, **dadurch gekennzeichnet, daß** die Polymere (c) 0,1 bis 99,9 mol-% der Monomereinheiten der Formel I und 0,1 bis 99,9 mol-% der Monomereinheiten der Formel II enthalten.

3. Verwendung nach Anspruch 1, **dadurch gekennzeichnet, daß** die Polymere zusätzlich ein monoethylenisch ungesättigtes Comonomer (d) einpolymerisiert enthalten.

4. Verwendung nach Anspruch 1, **dadurch gekennzeichnet, daß** die Polymere 20 bis 99,9 mol-% der Monomereinheiten (a), (b) oder (c) und 0,1 bis 80 mol-% des Comonomers (d) einpolymerisiert enthalten.

5. Verwendung nach den Ansprüchen 1 bis 4, **dadurch gekennzeichnet, daß** die Polymere vernetzt sind.

6. Verwendung nach Anspruch 5, **dadurch gekennzeichnet, daß** die Polymere zusätzlich ein mindestens zwei ethylenisch ungesättigte, nicht konjugierte Doppelbindungen enthaltendes, vemetzendes Comonomer (e) einpolymerisiert enthalten.

7. Verwendung nach Anspruch 5 oder 6, **dadurch gekennzeichnet, daß** die Polymere 20 bis 99,9 mol-% der Monomereinheiten (a), (b) oder (c), 0 bis 80 mol-% des Comonomers (d) und 0,1 bis 20 mol-% des Comonomers (e) einpolymerisiert enthalten.

8. Verwendung nach den Ansprüchen 5 bis 7, **dadurch gekennzeichnet, daß** die Polymere in Form eines Popcorn-Polymerisats vorliegen.

9. Verwendung nach den Ansprüchen 1 bis 8, **dadurch gekennzeichnet, daß** man die Polymere im Reinigungs- oder Klarspülmittel einsetzt.

10. Verwendung nach den Ansprüchen 1 bis 8, **dadurch gekennzeichnet, daß** man die Polymere separat als gewünschtenfalls geträgerten Feststoff in die Geschirrspülmaschine einbringt.

## Claims

1. The use of polymers which comprise
(a) monomer units of the formula I 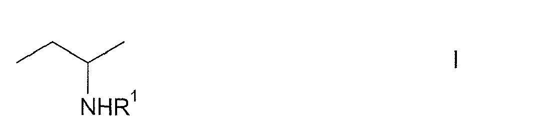 in which R¹ is hydrogen or C₁-C₄-alkyl,
(b) monomer units of the formula II 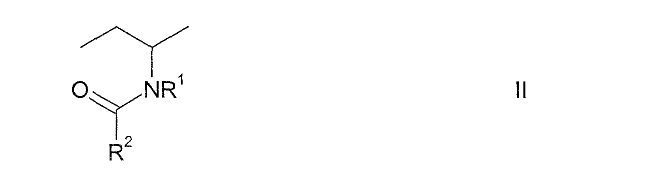 in which R¹ and R², independently of one another, are hydrogen or C₁-C₄-alkyl,
or
(c) monomer units of the formula I and monomer units of the formula II, for odor prevention during machine dishwashing.

2. The use according to claim 1, wherein the polymers (c) comprise 0.1 to 99.9 mol% of the monomer units of the formula I and 0.1 to 99.9 mol% of the monomer units of the formula II.

3. The use according to claim 1, wherein the polymers additionally comprise, in copolymerized form, a monoethylenically unsaturated comonomer (d).

4. The use according to claim 1, wherein the polymers comprise, in copolymerized form, 20 to 99.9 mol% of the monomer units (a), (b) or (c) and 0.1 to 80 mol% of the comonomer (d).

5. The use according to claims 1 to 4, wherein the polymers are crosslinked.

6. The use according to claim 5, wherein the polymers additionally comprise, in copolymerized form, a crosslinking comonomer (e) comprising at least two ethylenically unsaturated, nonconjugated double bonds.

7. The use according to claim 5 or 6, wherein the polymers comprise, in copolymerized form, 20 to 99.9 mol% of the monomer units (a), (b) or (c), 0 to 80 mol% of the comonomer (d) and 0.1 to 20 mol% of the comonomer (e).

8. The use according to claims 5 to 7, wherein the polymers are present in the form of a popcorn polymer.

9. The use according to claims 1 to 8, wherein the polymers are used in the detergent or the rinse aid.

10. The use according to claims 1 to 8, wherein the polymers are introduced separately into the dishwasher in the form of a, if desired supported, solid.

## Revendications

1. Utilisation de polymères qui contiennent
(a) des unités de monomère de la formule I : 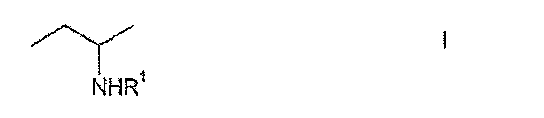 dans laquelle R¹ représente de l'hydrogène ou un groupe alkyle en C₁-C₄,
(b) des unités de monomère de la formule II : 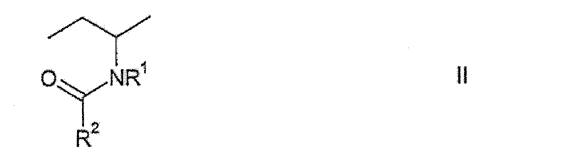 dans laquelle R¹ et R² représentent indépendamment l'un de l'autre de l'hydrogène
ou un groupe alkyle en C₁-C₄,
ou
(c) des unités de monomère de la formule I et des unités de monomère de la formule (II),
pour empêcher les odeurs lors du lavage de vaisselles à la machine.

2. Utilisation suivant la revendication 1, **caractérisée en ce que** les polymères (c) contiennent 0,1 à 99,9 % molaires des unités de monomère de la formule (I) et 0,1 à 99,9 % molaires des unités de monomère de la formule (II).

3. Utilisation suivant la revendication 1, **caractérisée en ce que** les polymères contiennent en supplément, à l'état copolymérisé, un comonomère monoéthyléniquement insaturé (d).

4. Utilisation suivant la revendication 1, **caractérisée en ce que** les polymères contiennent, à l'état copolymérisé, 20 à 99,9 % molaires des unités de monomère (a), (b) ou (c) et 0,1 à 80 % molaires du comonomère (d).

5. Utilisation suivant les revendications 1 à 4, **caractérisée en ce que** les polymères sont réticulés.

6. Utilisation suivant la revendication 5, **caractérisée en ce que** les polymères contiennent en supplément, à l'état copolymérisé, un comonomère réticulant (e) contenant au moins deux doubles liaisons éthyléniquement insaturées, non conjuguées.

7. Utilisation suivant la revendication 5 ou 6, **caractérisée en ce que** les polymères contiennent, à l'état copolymérisé, 20 à 99,9 % molaires des unités de monomère (a), (b) ou (c), 0 à 80 % molaires du comonomère (d) et 0,1 à 20 % molaires du comonomère (e).

8. Utilisation suivant les revendications 5 à 7, **caractérisée en ce que** les polymères se présentent sous la forme d'un produit de polymérisation granulaire.

9. Utilisation suivant les revendications 1 à 8, **caractérisée en ce qu'**on met en oeuvre les polymères dans des produits de nettoyage ou de rinçage.

10. Utilisation suivant les revendications 1 à 8, **caractérisée en ce qu'**on introduit les polymères séparément dans la machine à laver la vaisselle sous la forme d'une matière solide éventuellement sur support.
